(19) Europäisches Patentamt

European Patent Office

Office européen des brevets

(11) **EP 4 679 830 A1**

(12) **EUROPEAN PATENT APPLICATION**

(43) Date of publication:
14.01.2026 Bulletin 2026/03

(21) Application number: 24306175.1

(22) Date of filing: 12.07.2024

(51) International Patent Classification (IPC):
*H04N 19/46* (2014.01)   *G06T 9/00* (2006.01)
*G06T 15/00* (2011.01)

(52) Cooperative Patent Classification (CPC):
**H04N 19/46; G06T 9/001**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **THUDOR, Franck**
  **35000 RENNES (FR)**

• **CHUPEAU, Bertrand**
  **35700 RENNES (FR)**
• **SANDRI, Gustavo**
  **35510 CESSON-SEVIGNE (FR)**
• **SCHNEIDER, Jan Alexander**
  **35700 RENNES (FR)**
• **SABATER, Neus**
  **35830 BETTON (FR)**

(74) Representative: **Vossius & Partner**
**Patentanwälte Rechtsanwälte mbB**
**Siebertstraße 3**
**81675 München (DE)**

(54) **3DGS (3D GAUSSIAN SPLATTING) BASED INPAINTING FOR 3D DATA COMPRESSION**

(57) In one implementation, a method of decoding point cloud data is provided. The point cloud data is decoded with a 3D data decompression method to form reconstructed point cloud data, and data indicative of a 3D Gaussian splatting representation is decoded and used to inpaint the reconstructed point cloud. On the encoder side, the point cloud data is encoded with a 3D data compression method. A 3D Gaussian splatting representation can be generated based on the point cloud data. The encoder then encodes data indicative of the 3D Gaussian splatting representation.

**FIG. 5**

**Description**

<u>TECHNICAL FIELD</u>

The present embodiments generally relate to a method and an apparatus for 3D data compression and processing.

<u>BACKGROUND</u>

Advances in 3D capturing and rendering technologies are enabling new applications and services in the fields of autonomous driving, cultural heritage archival, immersive telepresence, and virtual/augmented reality. Point clouds have arisen as one of the main 3D scene representations for such applications. A point cloud frame consists of a set of 3D points, each point being unrelated to other points, each point being dimensionless, and each point being represented with its 3D position and possibly several attributes such as colour, transparency, reflectance, etc.

<u>SUMMARY</u>

According to an embodiment, a method of decoding point cloud data for a point cloud is presented, comprising: decoding the point cloud data with a 3D data decompression method to form reconstructed point cloud data; and decoding data indicative of a 3D Gaussian splatting representation used to inpaint the reconstructed point cloud.

According to another embodiment, an apparatus for decoding point cloud data is presented, comprising at least one memory and one or more processors, wherein the one or more processors are configured to: decode the point cloud data with a 3D data decompression method to form reconstructed point cloud data; and decode data indicative of a 3D Gaussian Splatting representation used to inpaint the reconstructed point cloud.

In one embodiment, the reconstructed point cloud data is rendered, and the 3D Gaussian Splatting representation is also rendered.

In one embodiment, each point in the reconstructed point cloud data is considered as an isotropic Gaussian model with an opacity of 1.

In one embodiment, each point in the reconstructed point cloud data is considered as an isotropic Gaussian model with a size of 1.

According to another embodiment, a method of encoding point cloud data for a point cloud is presented, comprising: encoding the point cloud data with a 3D data compression method; generating a 3D Gaussian splatting representation based on the point cloud data; and encoding data indicative of the 3D Gaussian splatting representation.

According to another embodiment, an apparatus for encoding point cloud data is presented, comprising at least one memory and one or more processors, wherein the one or more processors are configured to: encode the point cloud data with a 3D data compression method; generate a 3D Gaussian splatting representation based on the point cloud data; and encode data indicative of the 3D Gaussian splatting representation.

In one embodiment, a plurality of 3D Gaussian models are generated, and a subset of 3D Gaussian models is selected from the plurality of 3D Gaussian models based on 3D Gaussian model sizes, for the 3D Gaussian splatting representation.

In one embodiment, the size of a 3D Gaussian model is based on an ellipsoid volume.

In one embodiment, the plurality of 3D Gaussian models are sorted based on the 3D Gaussian model sizes and the selection is based on the sorted 3D Gaussian models.

In one embodiment, the data indicative of the 3D Gaussian splatting representation includes one or more of a center position, spherical harmonics coefficients, opacity, scale and orientation of a 3D Gaussian model.

One or more embodiments also provide a computer program comprising instructions which when executed by one or more processors cause the one or more processors to perform the encoding method or decoding method according to any of the embodiments described above. One or more of the present embodiments also provide a computer readable storage medium having stored thereon instructions for encoding or decoding point cloud data according to the methods described above.

One or more embodiments also provide a computer readable storage medium having stored thereon video data generated according to the methods described above. One or more embodiments also provide a method and apparatus for transmitting or receiving the video data generated according to the methods described above.

<u>BRIEF DESCRIPTION OF THE DRAWINGS</u>

FIG. 1 illustrates a block diagram of a system within which aspects of the present embodiments may be implemented.

FIG. 2A and FIG. 2B illustrate an example of trisoup geometry encoder artefact at a block side view and front view, respectively; FIG. 2C and FIG. 2D illustrate associated reconstructed point cloud and original point cloud, respectively.

FIG. 3 illustrates an example of rendering issues caused by the trisoup geometry encoder artefact, at two consecutive frames.

FIG. 4 illustrates an encoder diagram where 3DGS is used for inpainting, according to an embodiment.

FIG. 5 illustrates a decoder diagram where 3DGS is used for inpainting, according to an embodiment.

FIG. 6 illustrates an example of rendering a point cloud with a hole with an additional 3DGS, according to an embodiment.

DETAILED DESCRIPTION

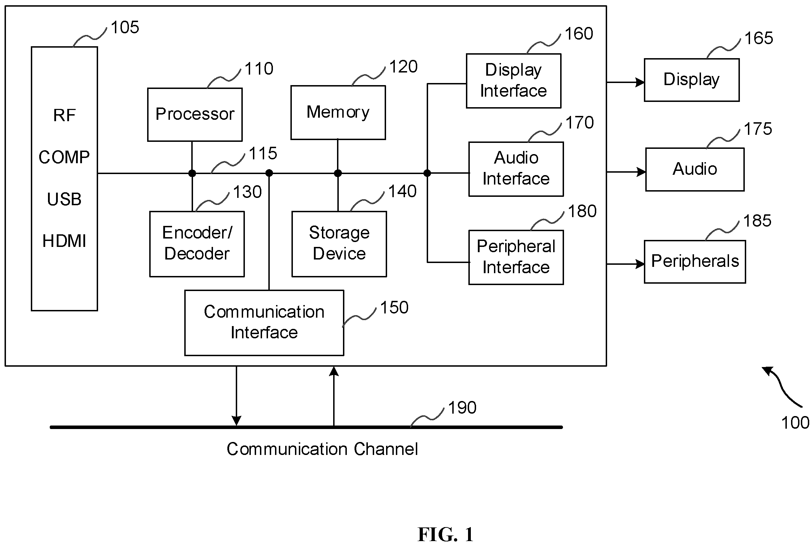

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, JPEG Pleno, MPEG-I, HEVC, or VVC.

The input to the elements of system 100 may be provided through various input devices as indicated in block 105.

Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing. Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

A standardization activity for point cloud compression is carried out by the ISO/IEC JTC1/SC29/WG7 "MPEG 3D Graphics and Haptics Coding" group, with the first edition of the Geometry-based Point Cloud Compression (G-PCC) standard, part 9 of the ISO/IEC 23090 series on the coded representation of immersive media.

From the framework of G-PCC second edition in construction, the compression of solid dynamic point clouds with a geometry-based approach, which is in the 3D space domain, without 3D-to-2D conversion to leverage existing 2D video codecs, has been identified as a separate target, and a specific part denoted Solid G-PCC is under development within MPEG. The current encoder includes a trisoup - standing for "soup of triangles" - geometry encoder, as it demonstrates the best geometry compression performance.

In geometry coding, the encoder first builds and encodes an octree. The bounding box is the main volume that contains all the points, and is associated to the root node (i.e., single node at the top of the tree). This volume is first divided into 8 sub-volumes called octants, each represented by a node in the tree. The octants that are occupied by at least one point, are then recursively split until a target level is reached. Each octant (or node) is represented by an occupancy byte that contains one bit per child octant, set to one if it is occupied by at least one point, or to zero otherwise. The occupancy bytes of all the octants are serialized and entropy coded with a binary arithmetic encoder.

Within each octant in the target level of the octree, the trisoup represents the original surface as a set of triangles. This surface is encoded and used to obtain the positions of the reconstructed (or decoded) points. The surface reconstruction process is performed in each octant of the target level of the octree. To reconstruct the decoded points, the triangular surfaces are filled with a regular grid of points. This operation is performed both at the encoder (for the reconstructed geometry, which is needed for color attribute coding) and the decoder (for the decoded geometry).

On the other hand, 3D Gaussian (3DG) splatting has emerged as a new scene representation that is able to render 3D radiance fields with the same quality than NeRF (Neural Radiance Fields) but much faster. Indeed, 3DG splatting avoids unnecessary computation in the empty space in order to decrease training time and achieve real-time rendering.

Mapping a set of spatial coordinates (x, y, z) and viewing directions $(\theta, \varphi)$ to color and density values, the 3D Gaussian representation is formulated as:

$$L_{3DGS}(x, y, z, \theta, \varphi) = \sum_i G(x, y, z, \mu_i, \Sigma_i) \cdot c_i(\theta, \varphi), \qquad (1)$$

where G is the Gaussian function with mean $\mu_i$ and covariance $\Sigma_i$, and $c_i$ represents the view-dependent color. A 3D Gaussian is characterized by its center (position) $\mu$, opacity $\alpha$, 3D covariance matrix $\Sigma$, and color $c$. $c$ is represented by spherical harmonics for view-dependent appearance. 3D GS (Gaussian Splatting) begins by projecting these 3D Gaussians onto a pixel-based image plane, a process termed "splatting". In the splatting step, 3D Gaussians (ellipsoids) are projected into the 2D image space (ellipses) for rendering.

The covariance matrix can be written as

$$\Sigma = RSS^T R^T \qquad (2)$$

where R is a rotation matrix and S a scaling matrix. R can be stored as a quaternion $(q_1, q_2, q_3, q_4)$, where only 3 components are independent when normalized, and S can be stored as a vector (si, $S_2$, $S_3$).

Given the viewing transformation W and 3D covariance matrix $\Sigma$, the projected 2D covariance matrix $\Sigma'$ is computed using:

$$\Sigma' = JW\Sigma W^T J^T, \qquad (3)$$

where J is the Jacobian of the affine approximation of the projective transformation. Afterwards, 3D GS sorts these Gaussians and computes the value for each pixel of the 2D image by alpha compositing:

$$C = \sum_{i \in N} c_i \alpha'_i \prod_{j=1}^{i-1} (1 - \alpha'_j) \qquad (4)$$

where N is the number of sorted Gaussians, $c_i$ is the color of the i-th Gaussian, and $\alpha'_i$ is the opacity of the i-th Gaussian after having taken into account the exponential decrease due to the distance between pixel p and the position of $\mu'_i$ (the projection of the center $\mu_i$ of the i-th Gaussian onto the 2D image), where $\alpha'_i$ is given by:

$$\alpha'_i = \alpha_i * exp\left(-\frac{1}{2}(p - \mu'_i)^T \Sigma'^{-1}_i (p - \mu'_i)\right) \qquad (5)$$

Gaussian splatting has already been used in the past in the computer graphics community. But recently, with the advent of artificial intelligence and the arrival of very powerful GPUs, new learning techniques have become popular, creating a paradigm-shift in the realm of 3D scene representation.

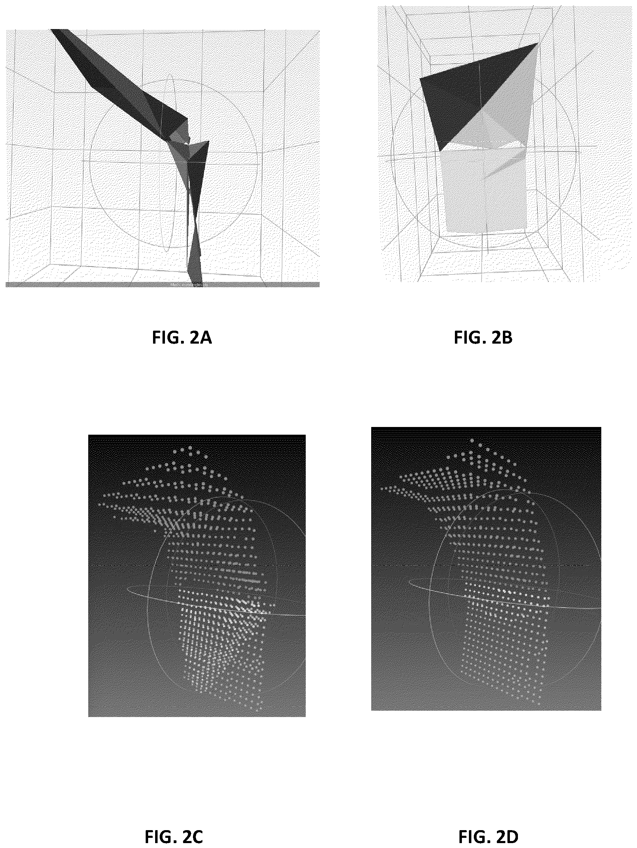

The trisoup geometry encoder relies on a surface approximation of the point cloud to encode. This results in a reduced processing time both at encoder and decoder side, and in a reduced bitstream size. At the same time, this approximation of the object geometry leads to some artifacts. Indeed, because of how the vertices are defined (normative) and because of how they are quantized (normative), geometry continuity is not ensured between blocks, and some holes may appear at the frontier of adjacent blocks as illustrated in FIG. 2.

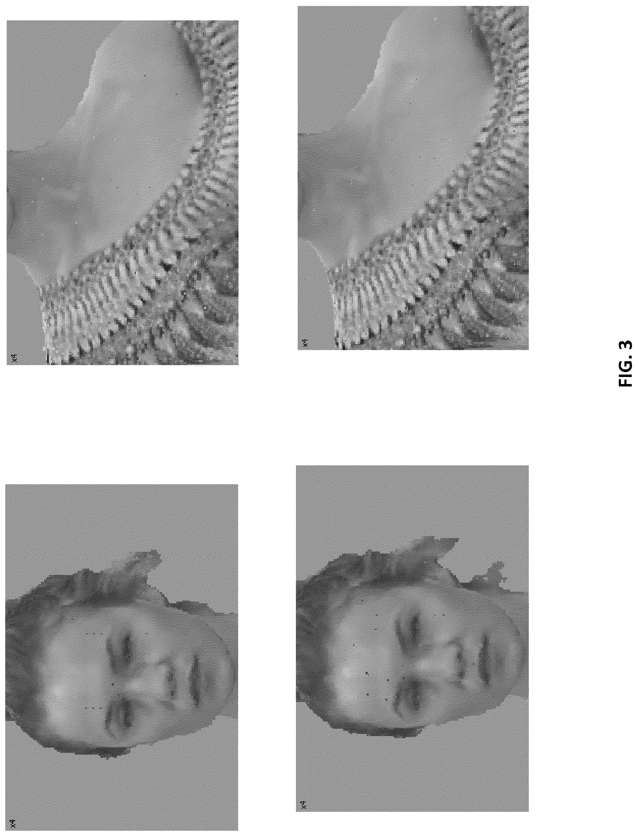

Depending on the viewport position and orientation, these holes might lead to annoying rendering artefacts, as depicted in the example of FIG. 3. In this example, the visible points correspond to colors coming from the back of the object.

One advantage of the 3DGS representation is its inherent ability to cope with different levels of details. By construction, some of the gaussians will represent fine details, while some other will be dedicated to a wider zone of the 3D space. This is a huge difference with respect to traditional point cloud compression, where each point is considered dimensionless.

The main drawback of 3DGS is that it requires a large amount of memory for the storage of the Gaussians. The memory consumption is significantly higher than NeRF-based solutions, linked to the generation of a large amount of 3DGs due to the densification process during optimization (cloning and splitting). Furthermore, there are a large number of attributes characterizing each 3DGS, taking into account direction of visualization.

In one embodiment, it is proposed to create a bitstream combining a 3DGS representation with the traditional trisoup-based encoded point cloud geometry. With only a small number of 3DGs, it is possible to overcome the artefacts produced by the trisoup geometry encoder. In the current embodiment, the 3DGS are not used as a fine representation of the input views, but as a way to inpaint missing data at decoder side. The following process can be performed for each frame.

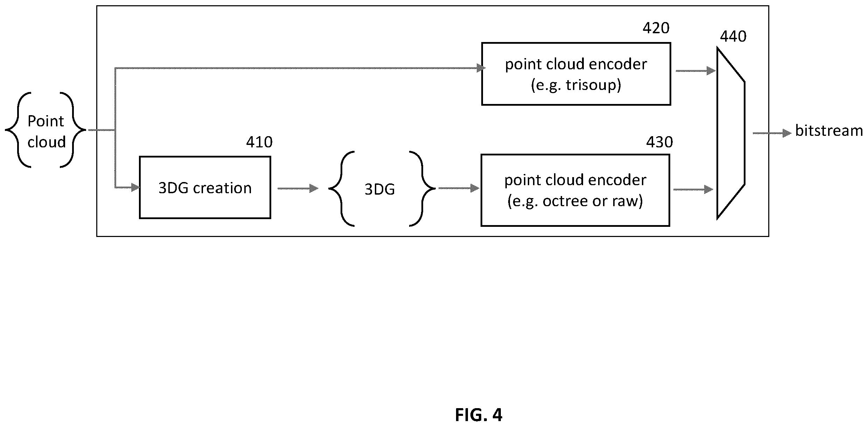

FIG. 4 illustrates an encoder diagram with 3DGS as inpainting, according to an embodiment. From an input point cloud, a bitstream is generated by, e.g., a point cloud encoder (420). On the other hand, 3D Gaussian models are created (410) as described in detail below. The 3D Gaussian model data is encoded, e.g., by another point cloud encoder (430). These two bitstreams are multiplexed (440) to output the bitstream.

### Generation of the 3DGS representation

Traditionally, a 3DGS representation is constructed through an optimization process where source and reconstructed views are compared. As we are considering a point cloud, there are no views. Hence it is proposed to construct an arbitrary set of projected views from the original point cloud. For instance, the 6 faces of the bounding box of the point cloud could be used. For each face, the reconstructed point cloud from the 3DGS representation is projected to build a view that is used in the optimization process altogether with the same view built from the original point cloud.

In the case the original views that led to create the original point cloud are available, then those views can be used in the optimization process.

### 3DGS selection

Only a small number of 3DGs need to be transmitted to be used for inpainting at decoder side. Moreover, only the big but not too big GS are of interest: because tiny 3DGs won't be able to cover many holes, and a huge 3DG might not suit local colors of the point cloud. Hence, in one implementation, we propose to set two ratios $\tau_1$ and $\tau_2$, $\tau_1 < \tau_2$, such that only the GS whose size is in the range $[\tau_1 \cdot S, \tau_2 \cdot S]$ are transmitted, with S being the size of the biggest generated GS. For example, $\tau_1 = 80\%$ and $\tau_2 = 90\%$.

A way to measure the size of the Gaussian is for example given by the ellipsoid volume formula $\frac{4}{3}\pi \times s_1 \times s_2 \times s_3$, where each $s_i$ represents the scale of the ellipsoid on one of the three axes, with "i" in [1, 3].

In another example, rather than comparing the size of the 3DG, the selection range can be computed on the order of the 3DG itself, such that only the 3DGs whose index in the sorted 3DGs size list is in the range $[\tau_1 \cdot N, \tau_2 \cdot N]$ are transmitted, where N is the number of generated 3DGs.

In the case of a non-homogeneous point cloud, leading to different maximum sizes of the 3DGs for different parts of the point cloud, then this treatment can be performed locally.

While this selection step has been described as an additional step after the 3DGs generation, it is likely that the generation and the selection processes are jointly performed during the optimization process.

If the original point cloud to encode does not have any specularity, it is not needed to produce any spherical harmonic at an order superior to the first order. In the case the point cloud has got many color attributes, then it can be considered to keep a higher order of SH.

As for traditional 3DGS, we end up with the following information to be transmitted for each GS: center position $\mu_i$, SH decomposition (first order only or with more orders), opacity ($\alpha$), scale ($s_1$, $s_2$, $s_3$), and orientation as a quaternion ($q_1$, $q_2$, $q_3$, $q_4$).

**Rendering**

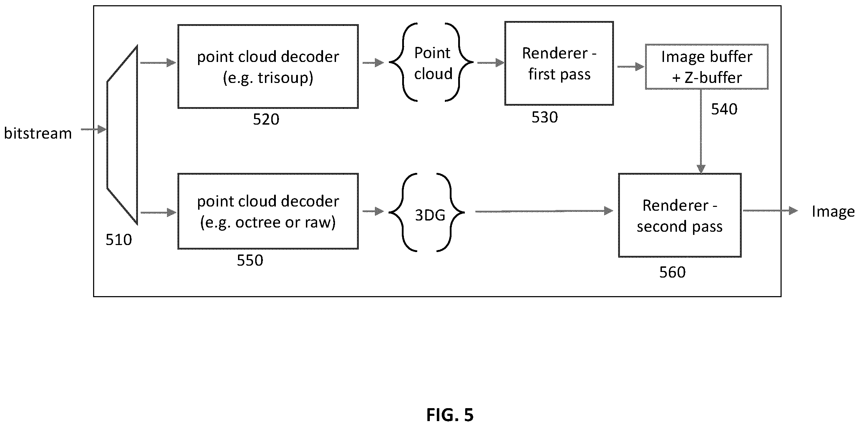

FIG. 5 illustrates a block diagram with 3DGS inpainting, according to an embodiment. The bitstream is demultiplexed (510) into two sub-streams. One sub-stream is decoded by a point cloud decoder (520) to decode point cloud data, and the other sub-stream is decoded by another point cloud decoder (550) to obtain the 3D Gaussian models.

At decoder side, a two-pass 3DGS renderer is used. First, the data from the compressed point cloud is rendered (530), as for the 3DGS rendering, by considering each point coming from the PCC bitstream as an isotropic 3DG with opacity = 1 and size = 1. Note that other sizes can be used. Then, the 3DGs coming from the additional bitstream are used (560) on top of this first rendering. A z-buffer is used to keep track of the height map of the rendered scene from the first pass, to enable/disable the color information coming from an overlapping 3DG to be blended on top of it.

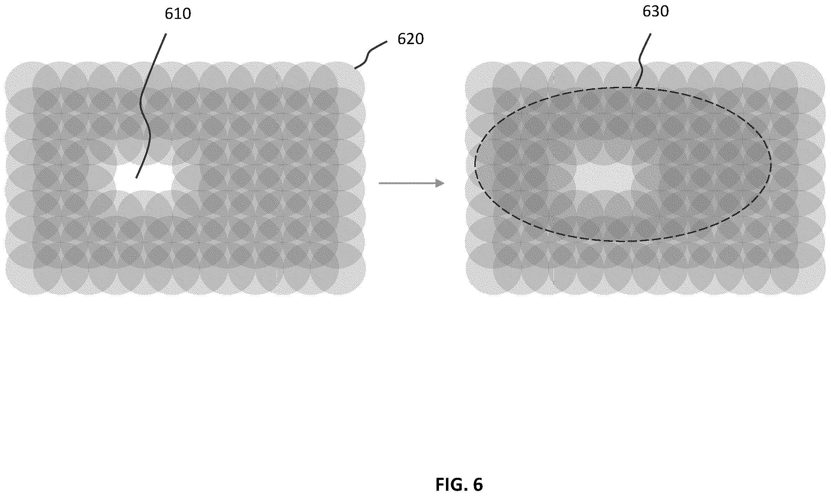

An example of rendering is presented in FIG. 6, where each point is considered as an isotropic 3DG (620) with opacity = 1 and size = 1, and a hole (610) can be filled by an additional 3DG (630). Note that even if the position is not center on the hole, the big size of the 3DG is enough to overlap it. Also, one 3DG can overlap many holes.

As described before, the rendering uses an alpha blending algorithm based on the following formula to get the color C at a given pixel p of the 2D image:

$$C = \sum_{i \in N} c_i \alpha'_i \prod_{j=1}^{i-1} \left(1 - \alpha'_j\right). \qquad (6)$$

Because only few 3DGs are generated and transmitted, only few 3DGs are rendered and the sorting operation is not time consuming.

In the above, we explain that 3DGS can be used to inpaint reconstructed point cloud data from a trisoup geometry-based point cloud decoder. More generally, 3DGS can be used to inpaint other reconstructed 3D data compressed by other 3D data encoder. For example, we can apply 3DGS inpainting to a mesh, if there is a lack of continuity between triangles, or even V-PCC, because the patch atlas does not ensure the continuity of the geometry at reconstruction.

Various numeric values are used in the present application. The specific values are for example purposes and the aspects described are not limited to these specific values.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method of decoding point cloud data, comprising:

   decoding the point cloud data with a 3D data decompression method to form reconstructed point cloud data; and
   decoding data indicative of a 3D Gaussian splatting representation used to inpaint the reconstructed point cloud.

2. An apparatus for decoding point cloud data, comprising at least one memory and one or more processors, wherein the one or more processors are configured to:

   decode the point cloud data with a 3D data decompression method to form reconstructed point cloud data; and
   decode data indicative of a 3D Gaussian Splatting representation used to inpaint the reconstructed point cloud.

3. The method of claim 1, further comprising, or the apparatus of claim 2, wherein the one or more processors are configured to perform:

   rendering the reconstructed point cloud data; and
   rendering the 3D Gaussian Splatting representation.

4. The method of claim 3, or the apparatus of claim 3, wherein each point in the reconstructed point cloud data is considered as an isotropic Gaussian model with an opacity of 1.

5. The method of claim 3 or 4, or the apparatus of claim 3 or 4, wherein each point in the reconstructed point cloud data is considered as an isotropic Gaussian model with a size of 1.

6. A method of encoding point cloud data, comprising:

   encoding the point cloud data with a 3D data compression method;
   generating a 3D Gaussian splatting representation based on the point cloud data; and
   encoding data indicative of the 3D Gaussian splatting representation.

7. An apparatus for encoding point cloud data, comprising at least one memory and one or more processors, wherein the one or more processors are configured to:

    encode the point cloud data with a 3D data compression method;
    generate a 3D Gaussian splatting representation based on the point cloud data; and
    encode data indicative of the 3D Gaussian splatting representation.

8. The method of claim 6, wherein the generating a 3D Gaussian splatting representation comprises, or the apparatus of claim 7, wherein the one or more processors are configured to perform:

    generating a plurality of 3D Gaussian models; and
    selecting a subset of 3D Gaussian models, from the plurality of 3D Gaussian models based on 3D Gaussian model sizes, for the 3D Gaussian splatting representation.

9. The method of claim 8, or the apparatus of claim 8, wherein a size of a 3D Gaussian model is based on an ellipsoid volume.

10. The method of claim 8, or the apparatus of claim 8, wherein the plurality of 3D Gaussian models are sorted based on the 3D Gaussian model sizes and the selecting is based on the sorted 3D Gaussian models.

11. The method of any one of claims 1, 3-6 and 8-10, or the apparatus of any one of claims 2-5 and 7-10, wherein the data indicative of the 3D Gaussian splatting representation includes one or more of a center position, spherical harmonics coefficients, opacity, scale and orientation of a 3D Gaussian model.

12. A signal comprising video data, formed by performing the method of any one of claims 1, 3-6 and 8-10.

13. A computer readable storage medium having stored thereon instructions for encoding or decoding point cloud data according to the method of any one of claims 1, 3-6 and 8-10.

FIG. 1

FIG. 2A

FIG. 2B

FIG. 2C

FIG. 2D

FIG. 3

EP 4 679 830 A1

**FIG. 4**

FIG. 5

FIG. 6

## EUROPEAN SEARCH REPORT

**Application Number**

EP 24 30 6175

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUEYU HU ET AL: "Bits-to-Photon: End-to-End Learned Scalable Point Cloud Compression for Direct Rendering", ARXIV.ORG, CORNELL UNIVERSITY LIBRARY, 201 OLIN LIBRARY CORNELL UNIVERSITY ITHACA, NY 14853, 9 June 2024 (2024-06-09), XP091783479, * the whole document * ----- | 1-13 | INV. H04N19/46 G06T9/00 G06T15/00 |
| A | HU YUEYU ET AL: "Low Latency Point Cloud Rendering with Learned Splatting", 2024 IEEE/CVF CONFERENCE ON COMPUTER VISION AND PATTERN RECOGNITION WORKSHOPS (CVPRW), IEEE, 17 June 2024 (2024-06-17), pages 5752-5761, XP034709159, DOI: 10.1109/CVPRW63382.2024.00584 [retrieved on 2024-09-27] * abstract * * sections 1 and 2 * ----- | 1-13 | |
| A | ANURAG DALAL ET AL: "Gaussian Splatting: 3D Reconstruction and Novel View Synthesis, a Review", ARXIV.ORG, CORNELL UNIVERSITY LIBRARY, 201 OLIN LIBRARY CORNELL UNIVERSITY ITHACA, NY 14853, 6 May 2024 (2024-05-06), XP091748964, * the whole document * ----- | 1-13 | **TECHNICAL FIELDS SEARCHED (IPC)** H04N G06T |

The present search report has been drawn up for all claims

| Place of search | Date of completion of the search | Examiner |
|---|---|---|
| The Hague | 4 December 2024 | André, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)